(19) Europäisches Patentamt
European Patent Office
Office européen des brevets

(11) **EP 3 263 322 B1**

(12) **EUROPÄISCHE PATENTSCHRIFT**

(45) Veröffentlichungstag und Bekanntmachung des Hinweises auf die Patenterteilung:
**16.12.2020 Patentblatt 2020/51**

(21) Anmeldenummer: **17165643.2**

(22) Anmeldetag: **10.04.2017**

(51) Int Cl.:
**B29D 30/06** *(2006.01)*    **B60C 11/11** *(2006.01)*
**B60C 11/13** *(2006.01)*

(54) **FORMSEGMENT UND LUFTREIFEN**

MOULD SEGMENT AND PNEUMATIC TYRE

SEGMENT DE FAÇONNAGE ET PNEU

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.06.2016 DE 102016211505**

(43) Veröffentlichungstag der Anmeldung:
**03.01.2018 Patentblatt 2018/01**

(73) Patentinhaber: **Continental Reifen Deutschland GmbH**
**30165 Hannover (DE)**

(72) Erfinder:
• **Chaturvedi, Bhaskar**
**30165 Hannover (DE)**

• **van der Steen, René**
**30161 Hannover (DE)**

(74) Vertreter: **Finger, Karsten**
**Continental Aktiengesellschaft**
**Patente und Lizenzen**
**Postfach 169**
**30001 Hannover (DE)**

(56) Entgegenhaltungen:
**EP-A1- 0 652 119        EP-A1- 1 676 727**
**EP-A2- 0 895 876        EP-A2- 0 925 957**
**WO-A1-2013/083429**

**Beschreibung**

Die vorliegende Erfindung bezieht sich auf ein Formsegment für einen Reifenrohling sowie einen Luftreifen, der aus einem Reifenrohling mittels eines erfindungsgemäßen Formsegments hergestellt worden ist.

Die Erfindung geht aus von einem Formsegment für einen Reifenrohling mit mindestens einer Aussparung in dem Formsegment. Dabei weist die mindestens eine Aussparung einen ersten Bereich und einen zweiten Bereich auf. Dabei weist der erste Bereich eine Form eines Zylindersegments auf und der zweite Bereich weist eine Form eines Polyeders auf. Der erste Bereich liegt zwischen dem Formsegment und dem zweiten Bereich. Dabei weist eine erste Oberfläche des ersten Bereichs, die zu dem Formsegment hin orientiert ist, einen Maximalabstand H zu einer Grenzfläche des zweiten Bereichs auf, wobei die Grenzfläche des zweiten Bereichs zu dem ersten Bereich hin orientiert ist. Die erste Oberfläche des ersten Bereichs ist konvex geformt und die Krümmung der ersten Oberfläche des ersten Bereichs folgt einem ersten Kreisbogen.

Bei dem Polyeder, dem die Form des zweiten Bereichs entspricht, handelt es sich beispielsweise um einen Hexaeder mit einem viereckigen Querschnitt. Der viereckige Querschnitt hat insbesondere eine rechteckige, insbesondere quadratische, oder trapezartige Form. Im Fall der trapezartigen Form, wobei der Querschnitt zwei parallele Seiten aufweist, wobei die zwei parallelen Seiten unterschiedlich lang sind, kann die kürzere der beiden Seiten zu dem ersten Bereich hinweisen und die längere der beiden Seiten von dem Formsegment weg weisen. Alternativ kann die längere der beiden Seiten zu dem ersten Bereich hinweisen und die kürzere der beiden Seiten von dem Formsegment weg weisen.

Das Formsegment ist zum Molding oder Formen des Reifenrohlings vorgesehen; das Formsegment kann auch als Moldingvorrichtung bezeichnet werden. Die Aussparung des Formsegments dient der Formung eines Profilblockelements des Reifenrohlings.

Der Maximalabstand H zwischen der ersten Oberfläche des ersten Bereichs und der Grenzfläche des zweiten Bereichs entspricht einer sich rechtwinklig zu der Grenzfläche des zweiten Bereichs erstreckenden ersten Ausdehnung des ersten Bereichs.

Aus dem Stand der Technik sind Luftreifen bekannt, wobei die Luftreifen Profilblockelemente aufweisen. Dabei weisen die Profilblockelemente insbesondere konvex gekrümmte Oberflächen auf. Diese Profilblockelemente wurden in dazu vorgesehenen Formsegmenten geformt.

Beispielsweise wird in der DE 10 2010 036 725 A1 ein Fahrzeugluftreifen mit einem profilierten Laufstreifen, mit radial erhabenen, durch Rillen voneinander getrennten Profilblockelementen offenbart. Dabei sind die Profilblockelemente in ihren die Reifenachsen aufweisenden Querschnittsebenen mit einer konvex gekrümmten Kontur der radialen äußeren Oberfläche ausgebildet.

Ferner wird in der DE 37 83 802 T2 ein Luftreifen offenbart, wobei der Luftreifen eine Mehrzahl von Traktionselementen aufweist, wobei Bodenberührungsflächen der Traktionselemente einem gekrümmten Pfad folgen können der konvex ausgebildet ist. Der konvexe Pfad folgt dabei einem allgemeinen parabolischen Ausdruck und der Grad an Konvexität des parabolischen Ausdrucks hängt funktionell von einer Entfernung eines Traktionselementes zu einer Mittenumfangsebene des Luftreifens ab.

In der EP0652119A1 **wird ein Luftreifen mit einer Profilblockstruktur offenbart.**

In der EP0895876A2 **wird ein Luftreifen mit einer Profilblockstruktur offenbart.**

In der EP0925957A2 **wird ein Luftreifen mit einer Profilblockstruktur offenbart.**

Bei den aus dem Stand der Technik bekannten konvexen Oberflächen der Profilblockelemente kann eine ungleichmäßige Druckverteilung auf der Oberfläche des Profilblockelementes und auf den Oberflächen einer Mehrzahl von Profilblockelementen eines Luftreifens erzeugt werden. Dies kann zu einer Verschlechterung der Fahreigenschaften des Luftreifens führen. Eine ungleichmäßige Druckverteilung auf den Oberflächen einer Mehrzahl an Profilblockelementen kann beispielsweise bei nasser Fahrbahn zu dem Effekt des Aquaplanings führen. Darüber hinaus können, aufgrund der ungleichmäßigen Druckverteilung auf der Oberfläche des Profilblockelementes, das Brems- und Reibungsverhalten des Reifens verschlechtert werden.

Der Erfindung liegt daher die Aufgabe zugrunde, den Einsatz eines Formsegmentes zu verbessern um dadurch Fahreigenschaften eines Luftreifens zu verbessern, beispielsweise das Brems- und Reibungsverhalten eines Luftreifens.

Gelöst wird die gestellte Aufgabe durch die Merkmale des unabhängigen Anspruchs 1.

Dabei entspricht die Breite W des zweiten Bereichs einer sich rechtwinklig zu der ersten Ausdehnung des ersten Bereichs sich erstreckenden Ausdehnung des zweiten Bereichs. Insbesondere entspricht die Breite W des zweiten Bereichs einer sich rechtwinklig zu der ersten Ausdehnung des ersten Bereichs sich erstreckenden maximalen oder minimalen Ausdehnung des zweiten Bereichs.

Durch den erfindungsgemäßen Umstand, wonach der Radius R des ersten Kreisbogens in Abhängigkeit einer Breite W des zweiten Bereichs ausgebildet ist, wird mindestens eine Aussparung in dem Formsegment erzeugt, mit der bestimmte Profilblockelemente auf einem Laufstreifen eines Reifenrohlings geformt werden. Die Profilblockelemente sind dabei auf einem Laufstreifen des Reifenrohlings angeordnet. Die in dem erfindungsgemäßen Formsegment geformten bestimmten Profilblockelemente weisen radial von dem Laufstreifen des Reifenrohlings weg weisende Oberflächen auf, bei denen, nachdem der Reifenrohling vulkanisiert wurde, eine gleichmäßige Druckverteilung auch auf einer Mehrzahl von derart geformten Profilblockelementen sichergestellt ist. Die gleichmäßige Druckverteilung auf den Oberflächen der Mehrzahl von Profilblockelementen ist dann aufgrund der Oberflächenformen der Profilblockelemente selbst sichergestellt. Die gleichmäßige Druckverteilung auf den Oberflächen der Mehrzahl an Profilblockelementen führt zu verbesserten Fahreigenschaften des Luftreifens. Insgesamt wird ein verbessertes Formsegment bereitgestellt, der Einsatz des Formsegments wird somit verbessert.

Hintergrund der Erfindung ist, dass es bei einem Reifenrohling, nachdem er einem Vulkanisationsverfahren unterzogen worden ist, nach Einsetzen einer Abkühlung des Reifenrohlings zu einer Kontraktion der Profilblockelemente kommen kann. Diese Kontraktion der Profilblockelemente kann zu einer ungleichmäßigen, mitunter sogar konkaven, Formung der Oberflächen der Profilblockelemente führen. Dadurch, dass der Radius R des ersten Kreisbogens in Abhängigkeit einer Breite W des zweiten Bereichs ausgebildet ist, wird ein Profilblockelement bereitgestellt, dass, nachdem es vulkanisiert worden ist und im zeitlichen Anschluss daran kontrahierte, eine Oberfläche aufweist, die eine gleichmäßige Druckverteilung auf dieser Oberfläche und insbesondere auf den Oberflächen einer Vielzahl von Profilblockelementen gewährleistet. Mittels der konvexen Form der ersten Oberfläche des ersten Bereiches wird, über eine Form des Profilblockelementes insgesamt, das Schrumpfverhalten des Profilblockelements derart ausgeglichen, dass eine konkave Formung der Oberfläche des Profilblockelements vermieden wird. Ursächlich für das Ausgleichen des Schrumpfverhaltens des Profilblockelements sind die konvexe Ausformung des Profilblockelementes und insbesondere die Abmessungen der konvexen Ausformung des Profilblockelementes. Diese Oberflächen der kontrahierten Profilblockelemente führen aufgrund ihrer Form bei Kontakt mit einer Fahrbahn zu verbesserten Fahreigenschaften des Luftreifens.

Die Erfindung betrifft darüber hinaus einen Luftreifen der aus einem Reifenrohling hergestellt worden ist, wobei der Reifenrohling in einem erfindungsgemäßen Formsegment geformt worden ist

Weitere vorteilhafte Ausgestaltungsformen der Erfindung sind Gegenstand der Unteransprüche.

Gemäß der Erfindung ist der Radius R des ersten Kreisbogens in Abhängigkeit eines Druckfaktors CPF ausgebildet. Dabei erfüllen insbesondere der Betrag r des Radius R, der Betrag w der Breite W des zweiten Bereichs und der Druckfaktor CPF eine erste Gleichung:

$$CPF = 10.000 / (r * w).$$

Durch den erfindungsgemäßen Umstand, dass der Radius R des ersten Kreisbogens in Abhängigkeit eines Druckfaktors CPF ausgebildet ist und insbesondere die Beträge des Radius R, der Weite W und der Druckfaktor CPF die erste Gleichung erfüllen, wird eine erste Oberfläche des ersten Bereichs ermöglicht, die in Abhängigkeit eines Druckfaktors ausgebildet ist. Dabei hängt der Druckfaktor CPF von den physischen Anforderungen ab, die während seines Einsatzes an den Luftreifen gestellt werden. Diese physischen Anforderungen stehen dabei in Zusammenhang mit dem zu erwartenden Druck, der auf einer Außenfläche eines Profilblockelementes während des Einsatzes lasten könnte. Somit kann die erste Oberfläche des ersten Bereichs exakt an die Einsatzanforderungen eines Luftreifens angepasst werden, wodurch die Fahreigenschaften des Luftreifens verbessert werden. Dabei gilt beispielsweise, dass für den Druckfaktor CPF ein höherer Wert sinnvoll ist, wenn der mögliche Effekt des Aquaplanings kompensiert werden soll. Hingegen ist für den Druckfaktor CPF ein kleinerer Wert sinnvoll, wenn ein besseres Bremsverhalten gewährleistet werden soll.

Gemäß einer nächsten vorzugsweisen Ausgestaltungsform der Erfindung ist der Maximalabstand H in Abhängigkeit des Radius R des ersten Kreisbogens und in Abhängigkeit der Breite W des zweiten Bereichs ausgebildet. Insbesondere erfüllen der Betrag h des Maximalabstandes H, der Betrag r des Radius R und der Betrag w der Breite W des zweiten Bereichs eine zweite Gleichung:

$$h = (r-\sqrt{(r^2-(w/2)^2)}).$$

Gemäß einer weiteren vorzugsweisen Ausgestaltungsform der Erfindung ist der Radius R des ersten Kreisbogens in Abhängigkeit der Breite W des zweiten Bereichs und in Abhängigkeit eines Radius R' ausgebildet. Dabei handelt es sich bei dem Radius R' um einen Radius eines zweiten Kreisbogens. Bei dem zweiten Kreisbogen handelt es sich um einen solchen Kreisbogen, dem eine konvexe Krümmung der Grenzfläche des zweiten Bereichs folgt.

Insbesondere erfüllen der Betrag r des Radius R, der Betrag r' des Radius R' und der Betrag w der Breite W eine dritte Gleichung: $r = (m^2+(w/2)^2 / 2m$. Dabei erfüllen m, der Betrag r des Radius R, der Betrag r' des Radius R' und der Betrag w der Breite W eine vierte Gleichung:

$$m = (r-\sqrt{(r^2-(w/2)^2)})+( r'-\sqrt{(r'^2-(w/2)^2)}).$$

Gemäß der Erfindung nimmt der Druckfaktor CPF einen Wert von 2 bis 9 und vorzugsweise 4 bis 7 bei einer Breite W von 20 mm an und/oder der Druckfaktor CPF nimmt einen Wert von 1 bis 4,5 und vorzugsweise 2 bis 3,5 bei einer Breite W von 25 mm an und/oder der Druckfaktor CPF nimmt einen Wert von 0,5 bis 3 und vorzugsweise 1,5 bis 2 bei einer Breite W von 30 mm an und/oder der Druckfaktor CPF nimmt einen Wert von 0,25 bis 1,5 und vorzugsweise 0,75 bis 1 bei einer Breite W von 35 mm an.

Weitere Merkmale, Vorteile und Einzelheiten, auf die die Erfindung in ihrem Umfang aber nicht beschränkt ist, werden nun anhand der Zeichnungen näher beschrieben.

Es zeigt:

Figur 1      eine schematische Darstellung eines erfindungsgemäßen Formsegmentes für einen Reifenrohling gemäß einer ersten Ausführungsform im Querschnitt;

Figur 2      eine schematische Darstellung eines erfindungsgemäßen Formsegmentes für einen Reifenrohling gemäß einer zweiten Ausführungsform im Querschnitt;

Figur 3      eine schematische Darstellung eines erfindungsgemäßen Formsegmentes für einen Reifenrohling gemäß einer dritten Ausführungsform im Querschnitt;

Figur 4      eine schematische Darstellung eines erfindungsgemäßen Formsegmentes für einen Reifenrohling gemäß einer vierten Ausführungsform im Querschnitt;

Figur 5      eine schematische Darstellung eines Bereichs eines Reifenrohlings in Radialschnittansicht;

Figur 6      eine schematische Darstellung eines Zusammenhangs zwischen dem Druckfaktor CPF zu der Breite W des zweiten Bereichs;

Figur 7      eine schematische Darstellung eines Zusammenhangs zwischen dem Maximalabstand H zu dem Druckfaktor CPF.

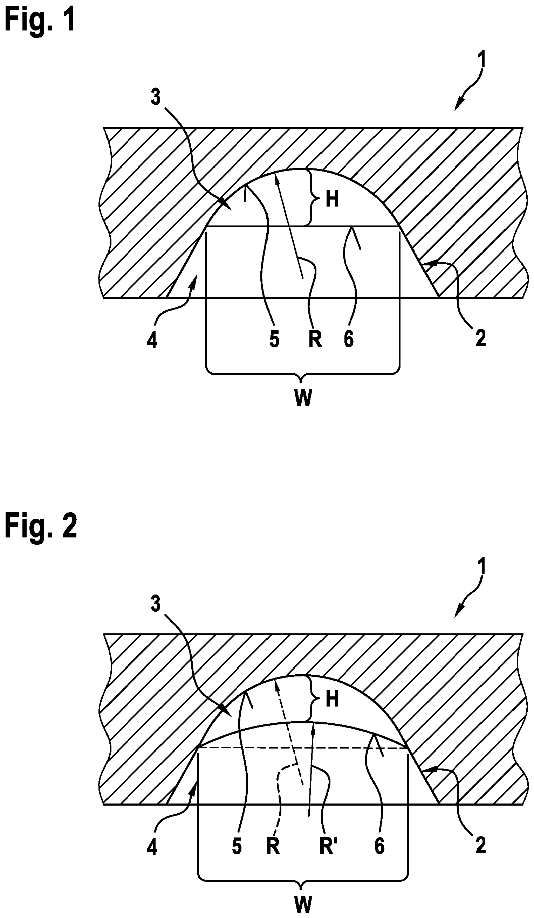

In der Figur 1 ist ein erfindungsgemäßes Formsegment für einen Reifenrohling mit einem Profilblockelement gemäß einer ersten Ausführungsform im Querschnitt schematisch dargestellt. Das Formsegment wird mit 1 bezeichnet. Das Formsegment 1 weist mindestens eine Aussparung 2 auf. Dabei weist die Aussparung 2 einen ersten Bereich 3 und einen zweiten Bereich 4 auf.

Der erste Bereich 3 weist eine Form eines Zylindersegments auf und der zweite Bereich 4 weist eine Form eines Polyeders auf. Dabei liegt der erste Bereich 3 räumlich zwischen dem Formsegment 1 und dem zweiten Bereich 4. Eine erste Oberfläche 5 des ersten Bereichs 3, die zu dem Formsegment 1 hin orientiert ist, weist einen Maximalabstand H zu einer Grenzfläche 6 des zweiten Bereichs 4 auf. Dabei ist die Grenzfläche 6 des zweiten Bereichs 4 zu dem ersten Bereich 3 hin orientiert. Die erste Oberfläche 5 des ersten Bereichs 3 ist konvex geformt und die Krümmung der ersten Oberfläche 5 des ersten Bereichs 3 folgt einem ersten Kreisbogen. Ein Radius R des ersten Kreisbogens ist dabei in Abhängigkeit einer Breite W des zweiten Bereichs 4 ausgebildet. Gemäß der in der Figur 1 schematisch dargestellten Ausführungsform handelt es sich bei der Breite W um die Ausdehnung des zweiten Bereichs 4, die zu dem ersten Bereich 3 hin weist. Bei der Breite W kann es sich auch um die Ausdehnung des zweiten Bereichs 4 handeln, die von dem ersten Bereich 3 und dem Formsegment 1 weg weist.

In der Figur 2 ist ein erfindungsgemäßes Formsegment 1 für einen Reifenrohling mit mindestens einer Aussparung 2 gemäß einer zweiten Ausführungsform im Querschnitt schematisch dargestellt. Im Unterschied zu der in der Figur 1 schematisch dargestellten Ausführungsform weist die Grenzfläche 6 des zweiten Bereichs 4 eine konvexe Krümmung auf. Diese konvexe Krümmung folgt einem zweiten Kreisbogen mit dem Radius R'. Gemäß dieser in der Figur 2 dargestellten Ausgestaltungsform der Erfindung ist der Radius R des ersten Kreisbogens in Abhängigkeit der Breite W des zweiten Bereichs 4 und in Abhängigkeit des Radius R' ausgebildet. Der Radius R ist als Strichlinie dargestellt, der Radius R' als durchgezogene Linie.

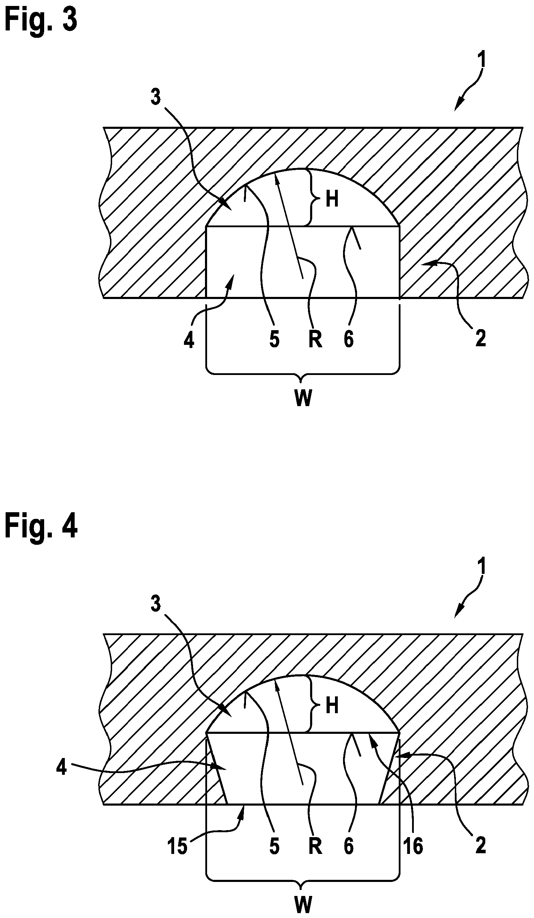

In der Figur 3 ist ein erfindungsgemäßes Formsegment 1 für einen Reifenrohling mit mindestens einer Aussparung 2 gemäß einer dritten Ausführungsform im Querschnitt schematisch dargestellt. Im Unterschied zu der in der Figur 1 schematisch dargestellten Ausführungsform folgt der Querschnitt des zweiten Bereichs 4 einer rechteckigen Form.

In der Figur 4 ist ein erfindungsgemäßes Formsegment 1 für einen Reifenrohling mit mindestens einer Aussparung 2 gemäß einer vierten Ausführungsform im Querschnitt schematisch dargestellt. Der Querschnitt des zweiten Bereichs 4 folgt einer trapezartigen Form. Eine Seite 16 und eine Seite 15 der trapezartigen Form des zweiten Bereichs 4 liegen parallel. Dabei weist die längere der beiden Seiten 16 zu dem ersten Bereich 3 hin. Die kürzere der beiden Seiten 15 weist von dem Formsegment 1 weg.

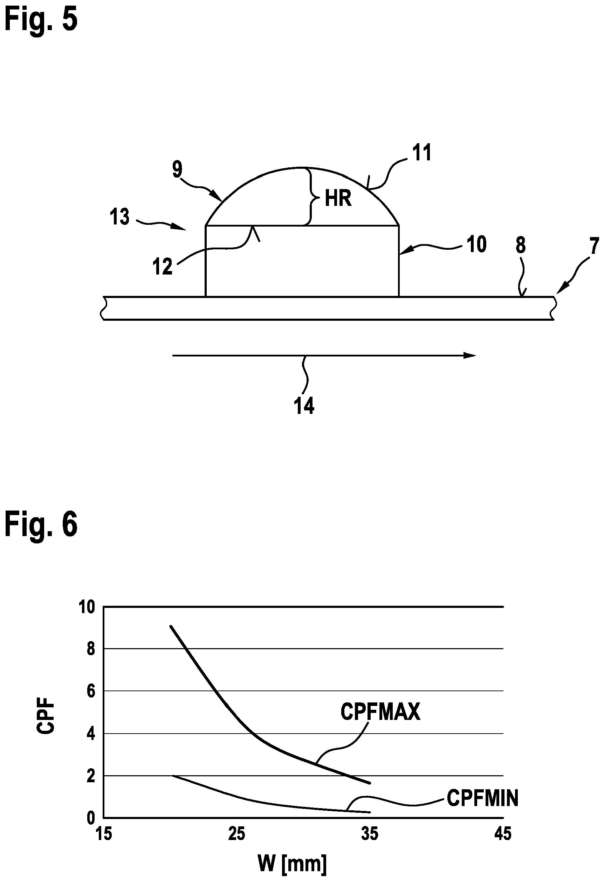

In der Figur 5 ist ein Bereich eines Reifenrohlings 7 schematisch in Radialschnittansicht dargestellt. Der Reifenrohling 7 wurde in einem erfindungsgemäßen Formsegment 1 geformt. Der Reifenrohling 7 weist eine Lauffläche 8 auf, auf der mindestens ein Profilblockelement 13 angeordnet ist. Das Profilblockelement 13 ist durch die mindestens eine Aussparung 2 des erfindungsgemäßen Formsegments 1 geformt worden. Gemäß der Figur 5 ist das Profilblockelement 13 in einem Zustand dargestellt, unmittelbar nachdem es aus dem Formsegment 1 heraus genommen worden ist. Eine Abkühlung des Profilblockelements 13 und eine damit einhergehende Kontraktion des Profilblockelements 13 haben noch nicht stattgefunden. Das Profilblockelement 13 weist einen ersten Bestandteil 9 und einen zweiten Bestandteil 10 auf. Dabei weist eine Grenzfläche 12 des zweiten Bestandteils 10, die senkrecht zu einer Rotationsachse 14 des Reifenrohlings 7 in radialer Richtung von dem Laufstreifen 8 weg weist, einen Maximalabstand HR zu einer Oberfläche 11 des ersten Bestandteils 9 auf. Die Oberfläche 11 stellt zugleich eine Oberfläche des Profilblockelements 13 dar, die mit einer Fahrbahn in Kontakt stehen kann. Dabei ist die Oberfläche 11 des ersten Bestandteils 9, die senkrecht zu der Rotationsachse 14 des Reifenrohlings 7 in radialer Richtung von dem Laufstreifen 8 weg weist, konvex geformt. Die Krümmung der Oberfläche 11 des ersten Bestandteils 9 folgt dabei einem ersten Kreisbogen. Somit wird mindestens ein Profilblockelement 13 bereitgestellt, dass, nachdem es abkühlt und kontrahiert ist, eine Oberfläche 11 aufweist, die keiner konkaven Krümmung folgt. Dies führt insbesondere zu einer günstigeren Druckverteilung auf einer Vielzahl von Profilblockelementen 13 auf einem Laufstreifen 8, die mittels eines erfindungsgemäßen Formsegments 1 geformt worden sind.

In der Figur 6 ist ein Zusammenhang zwischen dem Druckfaktor CPF und der Breite W des zweiten Bereichs 4 schematisch dargestellt. Aufgetragen ist der Druckfaktor CPF auf der Ordinate gegenüber der Breite W des zweiten Bereichs 4 in Millimetern auf der Abszisse. Mit CPFMAX wird der Verlauf der maximalen Druckfaktoren in Abhängigkeit der Breite W des zweiten Bereichs 4 bezeichnet. Mit CPFMIN wird der Verlauf der minimalen Druckfaktoren CPF in Abhängigkeit der Breite W des zweiten Bereichs 4 dargestellt. In Abhängigkeit der in Figur 6 dargestellten Druckfaktoren CPF und Breiten W des zweiten Bereichs 4 werden minimale Maximalabstände H von 0,2 mm und maximale Maximalabstände H von 0,9 mm ausgebildet. Im Fall eines maximalen Druckfaktors CPFMAX werden insbesondere Maximalabstände H ausgebildet, die dem 0,5-fachen der Breite W des zweiten Bereichs 4 entsprechen. Im Fall eines minimalen Druckfaktors CPFMIN werden insbesondere sehr geringe Maximalabstände H ausgebildet, der Radius R' entspricht dann nahezu dem Radius R.

Um ein gutes Fahrverhalten des Luftreifens, beispielsweise bei einem Aquaplaning, zu gewährleisten, sollten maximale Druckfaktoren CPFMAX gewählt werden. Um ein gutes Bremsverhalten des Luftreifens sicherzustellen, sollten minimale Druckfaktoren gewählt werden.

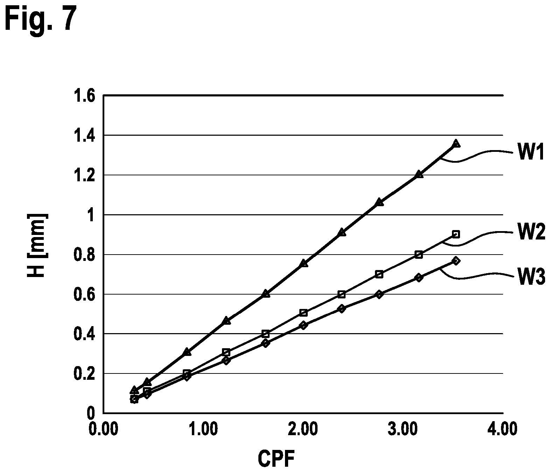

In der Figur 7 ist der Zusammenhang zwischen dem Maximalabstand H zu dem Druckfaktor CPF schematisch dargestellt. Aufgetragen ist der Maximalabstand H in Millimetern auf der Ordinate gegenüber dem Druckfaktor CPF auf der Abszisse. Dargestellt ist der Zusammenhang für drei verschiedene Breiten W des zweiten Bereichs 4. Der Verlauf der Kurve W1 zeigt den Zusammenhang zwischen dem Maximalabstand H zu dem Druckfaktor CPF für den Fall einer Breite W des zweiten Bereichs 4 von 25 mm. Die mit W2 bezeichnete Kurve zeigt den Zusammenhang zwischen dem Maximalabstand H zu dem Druckfaktor CPF bei einer Breite W des zweiten Bereichs 4 von 27 mm. Schließlich stellt die Kurve W3 den Zusammenhang zwischen dem Maximalabstand H zu dem Druckfaktor CPF bei einer Breite W des zweiten Bereichs 4 von 31 mm dar.

Bezugszeichenliste:

| 1. | Formsegment |
|---|---|
| 2. | Aussparung |
| 3. | erster Bereich |
| 4. | zweiter Bereich |
| 5. | erste Oberfläche des ersten Bereichs |
| 6. | Grenzfläche des zweiten Bereichs |
| 7. | Reifenrohling |
| 8. | Laufstreifen |
| 9. | erster Bestandteil |
| 10. | zweiter Bestandteil |
| 11. | Oberfläche des ersten Bestandteils |
| 12. | Grenzfläche des zweiten Bestandteils |
| 13. | Profilblockelement |
| 14. | Rotationsachse |
| 15. | Kürzere Seite eines Trapez |
| 16. | Längere Seite eines Trapez |
| CPFMAX | Maximaler Druckfaktor |
| CPFMIN | Minimaler Druckfaktor |
| H | Maximalabstand |
| HR | Maximalabstand im zweiten Bestandteil des Profilblockelements |
| R | Radius des ersten Kreisbogens |
| R' | Radius des zweiten Kreisbogens |
| W | Breite des zweiten Bereichs |
| W1 | Kurvenverlauf des Zusammenhangs zwischen dem Maximalabstand H zu dem Druckfaktor CPF für den Fall einer Breite W des zweiten Bereichs von 25 mm |
| W2 | Kurvenverlauf des Zusammenhangs zwischen dem Maximalabstand H zu dem Druckfaktor CPF für den Fall einer Breite W des zweiten Bereichs von 27 mm |
| W3 | Kurvenverlauf des Zusammenhangs zwischen dem Maximalabstand H zu dem Druckfaktor CPF für den Fall einer Breite W des zweiten Bereichs von 31 mm |

**Patentansprüche**

1. Formsegment (1) für einen Reifenrohling (7) mit dem mindestens einer Aussparung (2) in dem Formsegment (1), wobei die mindestens eine Aussparung (2) einen ersten Bereich (3) und einen zweiten Bereich (4) aufweist, wobei der erste Bereich (3) eine Form eines Zylindersegments aufweist und der zweite Bereich (4) eine Form eines Polyeders aufweist, wobei der erste Bereich (3) zwischen dem Formsegment (1) und dem zweiten Bereich (4) liegt, wobei eine erste Oberfläche (5) des ersten Bereichs (3), die zu dem Formsegment (1) hin orientiert ist, einen Maximalabstand H zu einer Grenzfläche (6) des zweiten Bereichs (4) aufweist, wobei die Grenzfläche (6) des zweiten Bereichs (4) zu dem ersten Bereich (3) hin orientiert ist, und wobei die erste Oberfläche (5) des ersten Bereichs (3) konvex geformt ist und die Krümmung der ersten Oberfläche (5) des ersten Bereichs (3) einem ersten Kreisbogen folgt, **dadurch gekennzeichnet, dass** der Radius R des ersten Kreisbogens in Abhängigkeit einer Breite W des zweiten Bereichs (4) ausgebildet ist, wobei der Radius R des ersten Kreisbogens in Abhängigkeit eines Druckfaktors CPF ausgebildet ist, und wobei der Betrag r des Radius R, der Betrag w der Breite W des zweiten Bereichs (3) und der Druckfaktor CPF eine erste Gleichung: $CPF = 10.000/(r \cdot w)$ erfüllen, wobei der Druckfaktor CPF einen Wert von 2 bis 9 und vorzugsweise 4 bis 7 bei einer Breite W von 20 mm annimmt und/oder der Druckfaktor CPF einen Wert von 1 bis 4,5 und vorzugsweise 2 bis 3,5 bei einer Breite W von 25 mm annimmt und/oder der Druckfaktor CPF einen Wert von 0,5 bis 3 und vorzugsweise 1,5 bis 2 bei einer Breite W von 30 mm annimmt und/oder der Druckfaktor CPF einen Wert von 0,25 bis 1,5 und vorzugsweise 0,75 bis 1 bei einer Breite W von 35 mm annimmt.

2. Formsegment (1) nach Anspruch 1, **dadurch gekennzeichnet, dass** der Maximalabstand H in Abhängigkeit des Radius R des ersten Kreisbogens und in Abhängigkeit der Breite W des zweiten Bereichs (3) ausgebildet ist und wobei insbesondere der Betrag h des Maximalabstands H, der Betrag r des Radius R und der Betrag w der Breite W des zweiten Bereichs (3) eine zweite Gleichung: $h = (r-\sqrt{r^2-(w/2)^2})$ erfüllen.

3. Formsegment (1) nach einem der vorhergehenden Ansprüche, **dadurch gekennzeichnet, dass** der Radius R des ersten Kreisbogens in Abhängigkeit der Breite W des zweiten Bereichs (3) und in Abhängigkeit eines Radius R' ausgebildet ist, wobei es sich bei dem Radius R' um einen Radius eines zweiten Kreisbogens handelt, wobei es sich bei dem zweiten Kreisbogen um einen Kreisbogen handelt, dem eine konvexe Krümmung der Grenzfläche (6) des zweiten Bereichs (3) folgt und wobei insbesondere der Betrag r des Radius R, der Betrag r' des Radius R' und der Betrag w der Breite W eine dritte Gleichung: $r = (m^2 + (w/2)^2) / 2m$ erfüllen, wobei m, der Betrag r des Radius R, der Betrag r' des Radius R' und der Betrag w der Breite W eine vierte Gleichung: $m = (r-\sqrt{r^2-(w/2)^2})+(r'-\sqrt{r'^2-(w/2)^2})$ erfüllen.

4. Luftreifen hergestellt aus einem Reifenrohling (7) der in einem Formsegment (1) nach einem der vorhergehenden Ansprüche geformt worden ist.

**Claims**

1. Mould segment (1) for a green tyre (7) with at least one clearance (2) in the mould segment (1), wherein the at least one clearance (2) has a first region (3) and a second region (4), wherein the first region (3) has a shape of a segment of a cylinder and the second region (4) has a shape of a polyhedron, wherein the first region (3) lies between the mould segment (1) and the second region (4), wherein a first surface (5) of the first region (3), which is oriented towards the mould segment (1), is at a maximum distance H from a boundary surface (6) of the second region (4), wherein the boundary surface (6) of the second region (4) is oriented towards the first region (3), and wherein the first surface (5) of the first region (3) is convexly shaped and the curvature of the first surface (5) of the first region (3) follows a first arc of a circle, **characterized in that** the radius R of the first arc of a circle is formed in dependence on a width W of the second region (4), wherein the radius R of the first arc of a circle is formed in dependence on a pressure factor CPF, and wherein the amount r of the radius R, the amount w of the width W of the second region (3) and the pressure factor CPF satisfy a first equation: $CPF = 10\,000/(r \cdot w)$, wherein the pressure factor CPF assumes a value of 2 to 9 and preferably 4 to 7 when there is a width W of 20 mm and/or the pressure factor CPF assumes a value of 1 to 4.5 and preferably 2 to 3.5 when there is a width W of 25 mm and/or the pressure factor CPF assumes a value of 0.5 to 3 and preferably 1.5 to 2 when there is a width W of 30 mm and/or the pressure factor CPF assumes a value of 0.25 to 1.5 and preferably 0.75 to 1 when there is a width W of 35 mm.

2. Mould segment (1) according to Claim 1, **characterized in that** the maximum distance H is formed in dependence on the radius R of the first arc of a circle and in dependence on the width W of the second region (3) and wherein in particular the amount h of the maximum distance H, the amount r of the radius R and the amount w of the width W of the second region (3) satisfy a second equation: $h = (r-\sqrt{r^2-(w/2)^2})$.

3. Mould segment (1) according to one of the preceding claims, **characterized in that** the radius R of the first arc of a circle is formed in dependence on the width W of the second region (3) and in dependence on a radius R', wherein the radius R' is a radius of a second arc of a circle, wherein the second arc of a circle is an arc of a circle that is followed by a convex curvature of the boundary surface (6) of the second region (3) and wherein in particular the amount r of the radius R, the amount r' of the radius R' and the amount w of the width W satisfy a third equation: $r = (m^2+(w/2)^2)/2m$, wherein m, the amount r of the radius R, the amount r' of the radius R' and the amount w of the width W satisfy a fourth equation: $m = (r - \sqrt{r^2 - (w/2)^2}) + (r'^2 - (w/2)^2))$.

4. Pneumatic tyre produced from a green tyre (7) that has been moulded in a mould segment (1) according to one of the preceding claims.

**Revendications**

1. Segment de moule (1) pour un pneu cru (7) avec au moins un évidement (2) dans le segment de moule (1), ledit au moins un évidement (2) présentant une première zone (3) et une deuxième zone (4), la première zone (3) présentant une forme de segment de cylindre et la deuxième zone (4) présentant une forme de polyèdre, la première zone (3) étant située entre le segment de moule (1) et la deuxième zone (4), dans lequel une première surface (5) de la première zone (3), qui est orientée vers le segment de moule (1), présente une distance maximale H jusqu'à une surface de séparation (6) de la deuxième zone (4), la surface de séparation (6) de la deuxième zone (4) étant orientée vers la première zone (3), et la première surface (5) de la première zone (3) étant de forme convexe et la courbure de la première surface (5) de la première zone (3) suivant un premier arc de cercle, **caractérisé en ce que** le rayon R du premier arc de cercle est réalisé en fonction d'une largeur W de la deuxième zone (4), le rayon du premier arc de cercle étant réalisé en fonction d'un facteur de pression CPF, et dans lequel la grandeur r du rayon R, la grandeur w de la largeur W de la deuxième zone (3) et le facteur de pression CPF satisfont à une première équation : $CPF = 10000/(r \cdot w)$, le facteur de pression CPF adoptant une valeur de 2 à 9 et de préférence de 4 à 7 pour une largeur W de 20 mm et/ou le facteur de pression CPF adoptant une valeur de 1 à 4,5 et de préférence de 2 à 3,5 pour une largeur W de 25 mm et/ou le facteur de pression CPF adoptant une valeur de 0,5 à 3 et de préférence de 1,5 à 2 pour une largeur W de 30 mm et/ou le facteur de pression CPF adoptant une valeur de 0,25 à 1,5 et de préférence de 0,75 à 1 pour une largeur W de 35 mm.

2. Segment de moule (1) selon la revendication 1, **caractérisé en ce que** la distance maximale H est réalisée en fonction du rayon R du premier arc de cercle et en fonction de la largeur W de la deuxième zone (3), et dans lequel en particulier la grandeur h de la distance maximale H, la grandeur r du rayon R et la grandeur w de la largeur W de la deuxième zone (3) satisfont à une deuxième équation : $h = (r - \sqrt{r^2 - (w/2)^2})$.

3. Segment de moule (1) selon l'une quelconque des revendications précédentes, **caractérisé en ce que** le rayon R du premier arc de cercle est réalisé en fonction de la largeur W de la deuxième zone (3) et en fonction d'un rayon R', le rayon R' étant un rayon d'un deuxième arc de cercle, le deuxième arc de cercle étant un arc de cercle suivi par une courbure convexe de la surface de séparation (6) de la deuxième zone (3), et dans lequel en particulier la grandeur r du rayon R, la grandeur r' du rayon R' et la grandeur w de la largeur W satisfont à une troisième équation : $r = (m^2 + (w/2)^2)/2m$, où m, la grandeur r du rayon R, la grandeur r' du rayon R' et la grandeur w de la largeur W satisfont à une quatrième équation : $m = (r - \sqrt{r^2 - (w/2)^2}) + (r'^2 - \sqrt{r'^2 - (w/2)^2}))$.

4. Pneumatique, fabriqué à partir d'un pneu cru (7) qui a été moulé dans un segment de moule (1) selon l'une quelconque des revendications précédentes.

## Fig. 1

## Fig. 2

# Fig. 3

# Fig. 4

# Fig. 5

# Fig. 6

## Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102010036725 A1
- DE 3783802 T2
- EP 0652119 A1
- EP 0895876 A2
- EP 0925957 A2